# EUROPEAN PATENT SPECIFICATION

(11) **EP 4 637 933 B1**
(45) Date of publication and mention of the grant of the patent: **14.10.2026**
(21) Application number: 23833437.9
(22) Date of filing: 18.12.2023
(51) Int. Cl.: A62C 3/02, A62C 31/28, B64D 1/16

(54) **FLUID DISCHARGING DEVICE**
FLUIDAUSSTOSSVORRICHTUNG
DISPOSITIF DE DISTRIBUTION DE FLUIDE

(30) Priority: 19.12.2022 EP 22383239
(43) Date of publication of application: 29.10.2025
(73) Proprietor: Airbus Defence and Space, S.A.U., 28906 Getafe - Madrid (ES)
(72) Inventor: ALCÓN SÁNCHEZ, Antonio, 28906 Getafe, Madrid (ES)
(74) Representative: ABG Intellectual Property Law, S.L.
(86) International application number: PCT/EP2023/086278
(87) International publication number: WO 2024/133026

(56) References cited:
- FR-A1- 2 610 287
- FR-A1- 2 610 894
- RU-U1- 4 278
- US-A- 5 699 862
- US-B1- 7 303 168

## Description

### TECHNICAL FIELD OF THE INVENTION

The present invention relates to devices for discharging fluid off an aircraft. More particularly, the present invention relates to discharging devices for firefighting aircraft. In addition, the present invention also relates to a firefighting system comprising said device, an aircraft comprising said firefighting system and a method for discharging fluid off an aircraft by means of said firefighting system.

### BACKGROUND OF THE INVENTION

In the aeronautical technical field, aerial firefighting makes use of specific aircrafts or helicopters as resources additional to the on-ground forces in order to combat wildfires.

In particular, firefighting aircraft bring support to the firefighters on the ground and can access steep, rocky, difficult to reach or unsafe areas before ground forces are able to make contact with these areas.

In particular, these aircraft, also called airtanker, have a fixed wing able to carry large volumes of fluid, normally fire retardant or water, in order to drop it on or in front of a fire and help slowing down the target fire. Fire retardants are known as a mix of chemicals or fluid such as salt compound, water, clay or thickening agent and colouring agent. These types of fire retardants are usually used to slow down or retard the spread of a target fire.

Fluid discharged off aircraft, particularly the first attack on the target fire, generally depend on the location of the fire, the fuels that are located in the area such as vegetation, timber, homes etc. and/or the current weather condition during intervention. Most fires are caught within the first two hours of a burning period which make the effectiveness and accuracy of the fluid discharging event off the aircraft crucial.

Existing firefighting systems/kits based on military transport aircraft are known in the art, these systems or kits are based on gravity conditions and pressurized water drop through the cargo ramp or lateral doors which do not use any redirector devices and, thus, are not capable of altering the geometry of the fluid stream discharged off the aircraft.

Firefighter kits or systems are known as temporary construction or devices that are placed inside the cabin of an aircraft, preferably in the cargo bay, cargo area or cargo body in, or around, the fuselage.

In fire extinguishing operations, the effectiveness of the fluid drop action is very important. However, firefighting aircraft nowadays provide poor control of the concentration of the discharged fluid and also of the pattern distribution reaching the target fire and corresponding terrain level.

Therefore, there is a need in the art for a device with an adaptive fluid discharging stream, having high effectiveness and avoiding excessive water stream distortion while discharging occurs.

Document US7303168B1 discloses an aircraft spraying conversion kit for use in extinguishing fires.

Document FR2610894A1 discloses a method and appliance for projecting a liquid product or the like, or a solid object, from an aircraft.

Document FR2610287A1 discloses a device intended to prevent the dispersion, during their fall, of liquids or powders jettisoned in bulk from an aircraft.

Document RU4278U1 discloses an amphibious firefighting aircraft.

Document US5699862A discloses a foam generating device for fire-fighting helicopter.

### SUMMARY OF THE INVENTION

The present invention provides a device for discharging a fluid off an aircraft according to claim 1, a firefighting system according to claim 10, an aircraft according to claim 12 and a method for discharging a fluid off an aircraft according to claim 14. Embodiments of the invention are defined in the dependent claims.

In a first inventive aspect, the invention provides a device for discharging a fluid off an aircraft, the device comprising:
two articulation members,
a foldable nozzle having an inlet, an outlet, a plurality of frames and a covering material located in between frames of the plurality of frames, wherein the plurality of frames have two ends rotatably attached to the articulation members,
actuating means configured for rotating the plurality of frames, and
closing means configured for closing a portion of the inlet of the foldable nozzle, wherein
the foldable nozzle further comprises a deflector plate located in between at least two frames of the plurality of frames.

The device of the invention comprises two articulation members, a foldable nozzle, actuating means and closing means. The foldable nozzle has a plurality of frames defining an inlet and an outlet. The plurality of frames have ends rotatably attached to the articulation members and operated by means of the actuating means. The articulation members, and thus the ends of the plurality of frames, are separated one from the other in order to define the shape of the inlet of the foldable nozzle.

In some embodiments, the foldable nozzle has a round wedge shape.

The closing means of the device of the invention are configured for closing a portion of the inlet of the foldable nozzle, thus reducing fluid backflow towards the aircraft. In some embodiments, the closing means cover an upper portion of the inlet of the foldable nozzle.

Discharging fluid while in flight provokes the formation of airflow vortex due to the in-flight conditions and to the pattern created by the fluid discharged. The device of the invention has an outlet which, in operation, is distant from the aircraft and the device is able to adapt the trajectory of the fluid so that the airflow vortex occurs at a farther distance from the aircraft, avoiding fluid stream distortion due to in-flight conditions.

The actuating means are configured for rotating the plurality of frames of the foldable nozzle. The position of the frames defines the position of the foldable nozzle, which can be a retracted position, a fully extended position or at least one intermediate extended position between the retracted position and the fully extended position. Each of these positions consequently orientates the outlet of the foldable nozzle in a different direction which provides its adaptive capacity to the device of the invention.

In some embodiments, the actuating means are operated mechanically or manually. In some embodiments, the actuating means are configured to deploy the foldable nozzle to one or more predetermined positions. In particular, the predetermined position influences the orientation of the outlet of the foldable nozzle, thus influences and modifies the trajectory of the fluid discharged. Preferably, there are a plurality of predetermined positions.

A covering material is located in between frames of the plurality of frames and said covering material is attached to the plurality of frames, preferably using attachment means. In some embodiments, the covering material is able to stretch so that the foldable nozzle can switch between a retracted position, where the plurality of frames are folded, and a fully extended position, where the plurality of frames and the covering material are both deployed completely. In some embodiments, the covering material is arranged such as to be extended when the foldable nozzle is in an extended position and to be folded when the foldable nozzle is in the retracted position.

The foldable nozzle of the device also comprises a deflector plate located in between at least two frames of the plurality of frames. In some embodiments, the deflector plate is located on the inner part of the foldable nozzle. In other embodiments, the deflector plate is located on the outer part of the foldable nozzle. In some other embodiments, the deflector plate is located on both the inner and the outer part of the foldable nozzle. The deflector plate, independently of its location, allows modifying and adapting the direction of the fluid discharged off the aircraft so that the trajectory of the fluid is improved and more efficient for extinguishing a target fire.

In the embodiment where the deflector plate is located on the inside part of the foldable nozzle, the deflector plate allows highest capacities of modifying and adapting the direction of the fluid discharged since the fluid enters directly in contact with the deflector plate.

The device of the invention provides a more effective fluid concentration discharged off the aircraft and the pattern distribution of the fluid is able to reach the target in an optimal manner.

The foldable nozzle of the present device provides an improved spreading pattern of the fluid discharged off the aircraft by modifying the trajectory of said fluid. In particular, the deflector plate helps adapting the fluid stream into a more vertical trajectory, thus diminishing the effect of the rear aircraft airflow and vortex created during in-flight conditions and avoiding excessive water stream distortion. This results in improved effectiveness.

Also, the device of the invention can be maintained permanently on an aircraft due to the possibility of having the foldable nozzle in a retracted position, since in retracted position the foldable nozzle has no impact on the in-flight conditions for the aircraft.

In some embodiments, the covering material is attached to the plurality of frames by means of glue, rivets or sewed. In some embodiments, the covering material comprises a plurality of enclosures configured for receiving the frames. The enclosures may be made of the same material as the covering material or of a different material. In some embodiments, at least one frame is attached to the covering material by only one enclosure. In some embodiments, at least one frame is attached to the covering material by a plurality of enclosures, each enclosure configured to receive a different portion of the frame. In some embodiments, the at least one enclosure is strapped to the corresponding frame by means of clips or retaining jaws arranged to grasp at the frame. In some embodiments, the clips or retaining jaws are fixed to the at least one enclosure by means of glue, rivets or sewed, or any other suitable means, depending on the material of the enclosure. In some embodiments, if the material allows it, like rubber or silicon, the at least one enclosure comprises at least one mechanical attachment embedded in the enclosure material, such as in form of lock hooks made of the same material or as inclusion of a dedicated joint element of the same or of a different material.

In a particular embodiment, the device further comprises supporting means arranged connecting the articulation members.

The supporting means provides additional rigidity and stability to the device of the invention. More particularly, the supporting means ensures that the shape of the inlet and the outlet are not altered while the fluid is discharged in-flight.

In some embodiments, the supporting means is a rod or a shaft. In these embodiments, the supporting means arranged connecting the articulation members may be considered as a rotation axis of the plurality of frames of the foldable nozzle.

In some other embodiments, the supporting means is a plate integral with both of the articulation members.

In a particular embodiment, the deflector plate is located between the last two successive frames of the plurality of frames at the outlet of the foldable nozzle.

Advantageously, by placing the deflector between the last two successive frames of the plurality of frames at the outlet of the foldable nozzle, the trajectory of the fluid discharged off the aircraft is adjusted in an optimal manner, since that is the portion of the foldable nozzle where more discharged fluid enters in contact due to the in-flight conditions.

When the deflector plate is located between the last two successive frames of the plurality of frames at the outlet of the foldable nozzle, the modifications of the trajectory of the fluid are optimal. That is, the changes of direction applied to the fluid are more precise and more effective.

In a particular embodiment, the actuating means comprise a manual actuator, an electro mechanic actuator, an electromotor actuator, a pneumatic actuator and/or an hydraulic actuator.

Advantageously, when the actuating means comprises an electro mechanic actuator, an electromotor actuator, a pneumatic actuator and/or an hydraulic actuator, the device is able to be controlled automatically and set in one of a plurality of predetermined positions.

In some embodiments, the device is able to switch in between these predetermined positions at any time while in flight.

In a particular embodiment, the actuating means further comprise locking means configured for locking the foldable nozzle.

Advantageously, the locking means help locking the foldable nozzle in a specific predetermined position during the entirety of the discharging operation, enhancing security.

In some embodiments, the locking means are security pins located at each of the articulation members.

In a particular embodiment, the deflector plate is made of metallic or composite material.

Advantageously, in this embodiment the deflector plate has high rigidity so that said deflector plate is able to endure high forces generated by the flow of the discharged fluid.

In a particular embodiment, the covering material is made of textile or plastic material.

In a particular embodiment, the outlet of the foldable nozzle, in an extended position, is located approximately in a range of [-20; +20] degrees with respect to horizontal datum.

Horizontal datum may be understood as a series of data points on the surface of the earth that are used to measure the position of a target with respect to the earth's surface. In particular, horizontal datum helps orienting and situating an object, a person or a target. In the particular case of the present invention, the horizontal datum help to configure the extended position of the device in which a specific predetermined position of the outlet of the foldable nozzle is required for a specific target when located at a specific location.

Advantageously, by adapting the angle of the foldable nozzle at which the fluid is discharged, the device of the invention is able to adapt to different fluid discharge angle configurations in order to provide optimal operational discharge conditions for a required fire target.

Also, the outlet of the foldable nozzle can be deployed at a predetermined angle before the operation and the foldable nozzle can be secured in that specific position by means of the locking means.

In some embodiments when the actuating means is mechanical, the predetermined positions can be activated from said actuating means and adjustable at any time while the aircraft is in flight.

In a particular embodiment, the plurality of frames are telescopic frames configured for extending away from the articulation members.

Advantageously, in this embodiment the telescopic frames allow adapting the area of the foldable nozzle in order to provide optimal condition of fluid discharge.

In some embodiments, the covering material has extending capacities to be able to adapt to the extension of the telescopic frames.

In some embodiments, the telescopic frames are attached to the covering material by means of an enclosure. When the telescopic frame is in an extended position, the enclosure is also extended to be able to adapt to the enlarged length of the telescopic frame. When the telescopic frame is in a non-extended position, the enclosure is folded, preferably in zig zag form.

In some embodiments, the telescopic frames comprise a plurality of portions having different shape and/or dimension and configured to fit one inside another. These portions create some interfaces at the junction where one portion fit inside the previous portion of a telescopic frame. In an embodiment of the frames portions fitting one inside of the other, a fluid seal is located at every interfaces in between portions of the telescopic frames in order to avoid the fluid discharged by the invention to escape through said interfaces in between telescopic frames.

In some embodiments, the covering material is attached to the telescopic frames by means of attachment means. In some embodiments the attachment means are strapped to the frame by means of clips or retaining jaws to grasp at the frame. In some embodiments the clips or retaining jaws are fixed to the covering material enclosing the telescopic frames by means of glue, rivets or sewed, depending on the material. If some embodiments, where the covering material allows it, such as rubber or silicon, the attachment means may be melted or embedded in the covering material.

In a second inventive aspect, the invention provides a firefighting system comprising a device for discharging a fluid off an aircraft according to any embodiment of the first inventive aspect of the invention.

In a particular embodiment of the second inventive aspect, the firefighting system further comprises a tank and a discharge conduct having an inlet and an outlet, wherein the tank is in fluid communication with the inlet of the discharge conduct and wherein the device is in fluid communication with the outlet of the discharge conduct.

The device of the present invention is able to adapt to any shape of the discharge conduct of the firefighting system.

Advantageously, the device of the invention is able to be mounted at the outlet of the discharge conduct. More particularly, any embodiment of the first inventive aspect is able to fit at the edge of the discharge conduct, that is, near the outlet of the discharge conduct. In an embodiment, in operation, with the firefighting system mounted in an aircraft, the device of the invention is mounted either in the cargo bay of the aircraft or in or around the fuselage of the aircraft.

In an embodiment, the ratio between the area of the outlet of the foldable nozzle and the area of the outlet of the discharge conduct is in the range from 0.9 to 1.3. Advantageously, when the ratio is in this particular range, the discharging fluid flow density is maintained during the stream deflection. In this embodiment, the ratio between the area of the outlet of the foldable nozzle and the area of the outlet of the discharge conduct is set such that undesired modification of the intended fluid stream or fluid flow is minimized. Said ratio provides more effective fluid distribution pattern when the discharged fluid reaches the ground.

In a third inventive aspect, the invention provides an aircraft comprising a firefighting system according to any embodiment of the second inventive aspect.

In a particular embodiment of the third inventive aspect, the aircraft further comprises controlling means configured for controlling the actuating means.

In some embodiments, the actuating means can be controlled from the cockpit and/or from the cargo bay area of the aircraft so that the device of the invention can be adapted to the conditions required for discharging the fluid at a specific target.

In a fourth inventive aspect, the present invention provides a method for discharging a fluid off an aircraft, the method comprising the following steps:
a) providing a firefighting system according to any embodiment of the second inventive aspect or an aircraft according to any embodiment of the third inventive aspect,
b) extending the foldable nozzle by means of the actuating means until the outlet of the foldable nozzle reaches a predetermined position,
c) discharging the fluid off the aircraft.

In some embodiments, in step b) of the method of the fourth inventive aspect of the invention, the actuating means comprise a manual actuator, an electro mechanic actuator, an electromotor actuator, a pneumatic actuator and/or an hydraulic actuator.

In some embodiments, the actuating means comprise locking means configured for locking the foldable nozzle in order to block the foldable nozzle in a specific position.

During step c), when the fluid is discharged off the aircraft via the discharge conduct and through the device of any embodiment of the first inventive aspect, the fluid enters in contact with the part of the foldable nozzle where the deflector plate is arranged, which influences the trajectory and direction of the fluid.

At the same time, also during step c), the closing means of the device of the present invention prevents that any fluid backflow towards the aircraft occurs while discharging said fluid off the aircraft. Therefore, optimal quantity of fluid is discharged to the target and security of the aircraft is enhanced.

In a particular embodiment of the fourth inventive aspect, the predetermined position of step b) is selected from a first, a second or a third predetermined position and wherein:
- at the first predetermined position, the outlet of the foldable nozzle is oriented at -20 degrees with respect to horizontal datum,
- at the second predetermined position, the outlet of the foldable nozzle is parallel to horizontal datum,
- at the third predetermined position, the outlet of the foldable nozzle is oriented at +20 degrees with respect to horizontal datum.

Each of the predetermined positions above mentioned allows adapting the foldable nozzle, more particularly the orientation of the outlet of the foldable nozzle, to a specific fluid discharging angle which is optimal for the conditions of the firefighting operation, that is with respect to the target and its coordinate calculated based on the horizontal datum.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a perspective view of a firefighting system according to an embodiment of the invention.
- Figure 2: This figure shows a side view of a firefighting system according to an embodiment of the invention.
- Figure 3: This figure shows a side view of a device for discharging fluid off an aircraft according to an embodiment of the invention in a retracted position.
- Figure 4: This figure shows a schematic side view of a firefighting system according to an embodiment of the invention.
- Figure 5: This figure shows a schematic view of an aircraft according to an embodiment of the invention.

### DETAILED DESCRIPTION OF THE INVENTION

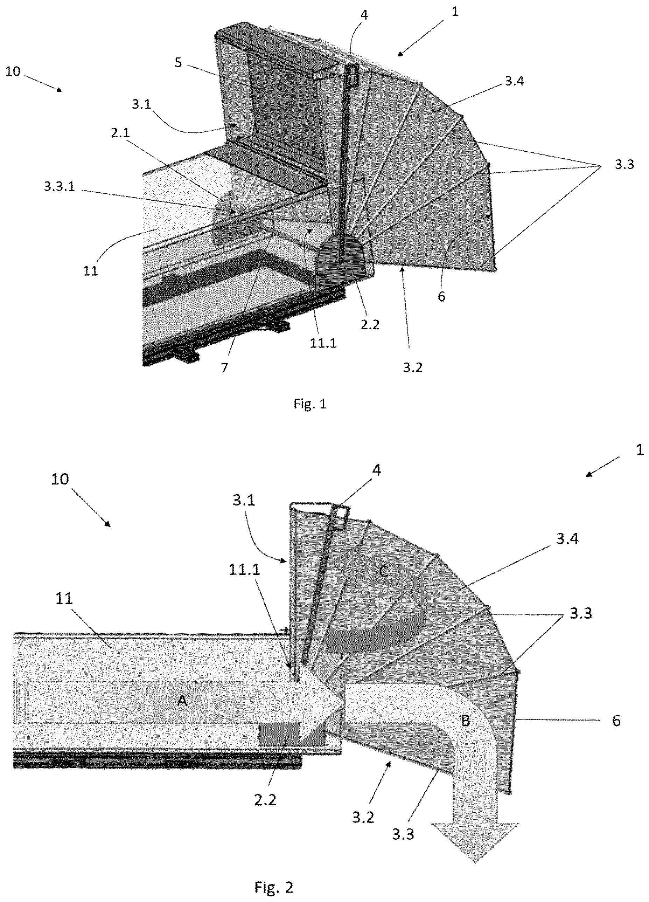

Figure 1 shows a perspective view of an embodiment of a firefighting system (10) for discharging fluid off an aircraft according to the invention. In this figure some elements are depicted as partially transparent to be able to observe other elements which otherwise would not be visible.

In this embodiment, a device (1) for discharging a fluid off an aircraft is mounted at the outlet (11.1) of a discharge conduct (11). The device (1) has two articulation members (2.1, 2.2) located on each side of the discharge conduct (11). In this specific embodiment, the two articulation members (2.1, 2.2) are mounted on the exterior sides of the discharge conduct (11).

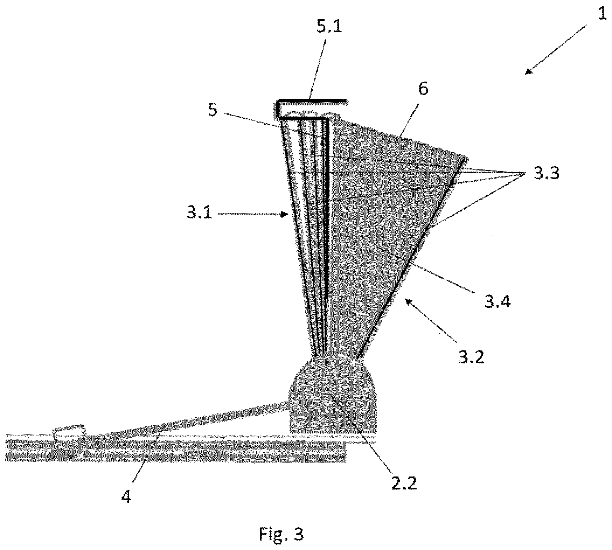

The device (1) also comprises a foldable nozzle (3) which, in Figure 1, is shown in a fully extended position. In order for the foldable nozzle (3) to be extended or retracted, the device (1) comprises actuating means (4). In Figure 1, the actuating means (4) are manual and can be switched from a first position, substantially parallel to the discharge conduct (11) (not shown in Figure 1), when the device (1) is in a retracted position (as shown in Figure 3 and described further in the present document), to a second position substantially perpendicular to the discharge conduct (11).

In some other embodiments, the actuating means (4) comprise an electro mechanic actuator, an electromotor actuator, a pneumatic actuator and/or an hydraulic actuator.

In some embodiments, not shown in this Figure, the actuating means (4) further comprise locking means configured for locking the foldable nozzle.

The foldable nozzle (3) of the embodiment shown in Figure 1 comprises an inlet (3.1) which is in fluid communication with the outlet (11.1) of the discharge conduct (11). A portion of the inlet (3.1) of the foldable nozzle (3) is partly covered by closing means (5) which avoid any fluid backflow towards the aircraft when the firefighting system (10) is arranged in an aircraft and the fluid is discharged off the firefighting system (10).

The foldable nozzle (3) also comprises a plurality of frames (3.3) having two ends (3.3.1). Each end (3.3.1) is rotatably attached to one of the two articulation members (2.1, 2.2). Due to the orientation of the view of Figure 1, only one end (3.3.1) is visible, the other end being hidden by an articulation member (2.2).

In this specific embodiment shown in Figure 1, supporting means (7) are arranged connecting the articulation members (2.1, 2.2) in order to provide additional support and stability while defining the shape of the inlet (3.1) of the foldable nozzle (3). In particular, in this embodiment the supporting means (7) is a rod or shaft extending from one articulation member (2.1, 2.2) to the other.

In this particular embodiment the foldable nozzle (3) comprises six frames (3.3), and a covering material (3.4) is located in between frames of the plurality of frames (3.3). In some embodiments, the covering material (3.4) is made of textile or plastic material.

The foldable nozzle (3) of the device (1) of the invention also comprises a deflector plate (6) located in between at least two frames of the plurality of frames (3.3). In particular, in Figure 1, the deflector plate (6) is located between the last two successive frames of the plurality of frames (3) at the outlet (3.1) of the foldable nozzle (3). In operation, the deflector plate (6) is arranged facing the fluid flow discharged via the discharge conduct (11) so that said fluid enters in contact with the deflector plate (6) and the trajectory of the fluid is modified. Flow directions and changes of trajectories are schematically represented in Figures 2 and 3.

In some embodiments, the deflector plate (6) is made of metallic or composite material.

In some embodiments, the plurality of frames (3.3) are telescopic frames configured for extending away from the articulation members (2.1, 2.2).

Also, the firefighting system (10) further comprises a tank, not shown in the embodiment of the firefighting system (10) of Figure 1, wherein the tank is in fluid communication with the inlet (also not shown) of the discharge conduct (11) and wherein the device (1) is in fluid communication with the outlet (11.1) of the discharge conduct (11).

Figure 2 shows a side view of the embodiment already depicted in Figure 1 where the firefighting system (10) comprises a device (1) according to an embodiment of the invention and said device (1) is represented in an extended position. Also, Figure 2 schematically shows the flow pattern of a fluid discharging operation.

As shown in Figure 2, the fluid is discharged off an aircraft from a tank (not shown) towards the outlet (11.1) of the discharge conduct (11) as represented by arrow A. Once the fluid reaches the inlet (3.1) of the foldable nozzle (3), the fluid gets into the foldable nozzle (3) and enters in contact with the deflector plate (6), located between the last two successive frames of the plurality of frames (3.3) at the outlet (3.1) of the foldable nozzle (3) in this embodiment. By contacting the deflector plate (6), the fluid trajectory is modified so that said fluid is discharged towards the target through the outlet (3.2) of the foldable nozzle (3) following the path of arrow B.

When discharging a fluid off an aircraft, fluid backflow occurs as represented by arrow C which provokes water ingestion inside the aircraft. In that sense, the device (1) of the invention provides closing means (5), partially visible in this side view of the firefighting system (10), so that a portion of the inlet (3.1) of the foldable nozzle (3) is covered by said closing means (5), which avoid fluid backflow.

Figure 3 shows a side view of an embodiment of the device (1) of the invention where the foldable nozzle (3) is in a retracted position. In this retracted position, the plurality of frames (3.3) are shown in such a position that the covering material (3.4) is not extended. In this embodiment, the covering material is folded, similarly to a bellows, in the retracted position of the foldable nozzle. However, the two successive frames of the plurality of frames (3.3) where the deflector plate (6) is located are always extended due to the rigidity provided by the deflector plate (6) to this particular area of the foldable nozzle (3). In this particular embodiment, the deflector plate (6) is located between the last two successive frames of the plurality of frames (3.3) at the outlet (3.2) of the foldable nozzle (3).

In this embodiment, the closing means (5) are embodied as a folded plate which defines a receiving portion (5.1) configured for receiving some of the frames (3.3).

In that same embodiment of Figure 3, the actuating means (4), represented in this figure as a manual actuator, are shown in a low position which corresponds to the retracted position of the foldable nozzle (3). Also, when in a retracted position, the plurality of frames (3.3), except the last two successive frames of the plurality of frames (3.3), are retracted and placed inside the receiving portion (5.1) of the closing means (5).

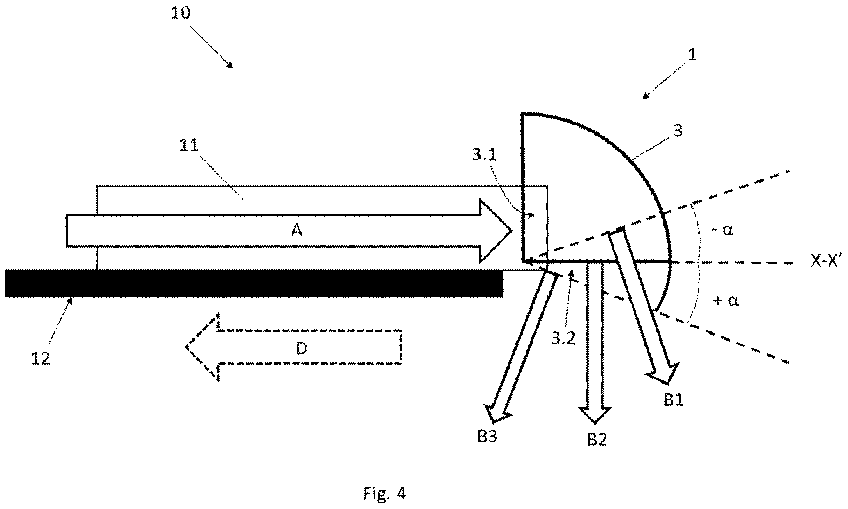

Figure 4 depicts a schematic view of an embodiment of the firefighting system (10), with the foldable nozzle (3) in an extended position. In particular, Figure 4 shows several predetermined positions that can be selected for the outlet (3.2) of the foldable nozzle (3) following the condition of fluid discharge required for a specific target.

The fluid flow inside the discharge conduct (11) is represented by arrow A compared to the flight direction represented by arrow D. The discharge conduct (11) is placed over a portion of a cargo area (12) of an aircraft.

As shown in Figure 4, the foldable nozzle (3) is extended by means of the actuating means until the outlet (3.2) of the foldable nozzle (3) reaches a predetermined position. In particular embodiments, the predetermined position is selected between a first, a second or a third position.

In some embodiments, the outlet (3.2) of the foldable nozzle (3), in an extended position, is located approximately in a range of [-α; +α] degrees with respect to horizontal datum. In an embodiment α is substantially 20 degrees.

As depicted in Figure 4, the second predetermined position is a position where the outlet (3.2) of the foldable nozzle (3) is parallel with respect to horizontal datum as defined previously in the present document. In that case, the outlet (3.2) is located along an axis X-X' and said orientation of the outlet (3.2) helps modifying the trajectory of the fluid entering the device (1) so that the fluid is discharged in a direction following arrow B2, substantially perpendicular to the flight direction represented by arrow D.

Also in the embodiment depicted in Figure 4, a first predetermined position can be selected so that the outlet (3.2) of the foldable nozzle (3) is oriented at -α degrees with respect to the horizontal datum. In that specific predetermined position, the trajectory of the fluid is modified such as the direction of the fluid follows the direction as represented by arrow B1.

Finally, in the embodiment shown in Figure 4, the third predetermined position can be selected so that the outlet (3.2) of the foldable nozzle (3) is oriented at +α degrees with respect to the horizontal datum. In that specific predetermined position, the trajectory of the fluid is modified such as the direction of the fluid follows the direction represented by arrow B3.

In some embodiments, where the actuation means are mechanical and controllable via control means, the predetermined position can be selected between the first, the second or the third predetermined position and changed at any time while in-flight so that the outlet (3.2) of the foldable nozzle (3) is always oriented in an optimal way with respect to the horizontal datum so that the fluid can be efficiently discharged on a target.

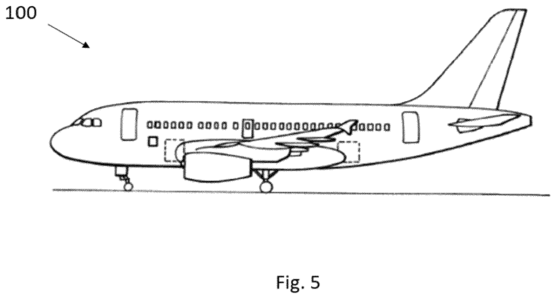

Figure 5 depicts an aircraft (100) comprising a firefighting system (10) according to an embodiment of the invention.

In some embodiments, the firefighting system (10) further comprises a tank and a discharge conduct having an inlet and an outlet, wherein the tank is in fluid communication with the inlet of the discharge conduct and wherein the device is in fluid communication with the outlet of the discharge conduct.

In some further embodiments, the aircraft (100) further comprises controlling means (not shown) configured for controlling the actuating means (4). Preferably, the controlling means are located inside the fuselage of the aircraft (100).

## Claims

1. A device (1) for discharging a fluid off an aircraft (100), the device (1) comprising:
two articulation members (2.1, 2.2),
a foldable nozzle (3) having an inlet (3.1), an outlet (3.2), a plurality of frames (3.3) and a covering material (3.4) located in between frames of the plurality of frames (3.3), wherein the plurality of frames (3.3) have two ends (3.3.1, 3.3.2) rotatably attached to the articulation members (2.1, 2.2),
actuating means (4) configured for rotating the plurality of frames (3.3), and
closing means (5) configured for closing a portion of the inlet (3.1) of the foldable nozzle (3),
wherein
the foldable nozzle (3) further comprises a deflector plate (6) located in between at least two frames of the plurality of frames (3.3).

2. The device (1) according to the preceding claim, further comprising supporting means (7) arranged connecting the articulation members (2.1, 2.2).

3. The device (1) according to any of the preceding claims, wherein the deflector plate (6) is located between the last two successive frames of the plurality of frames (3.3) at the outlet (3.2) of the foldable nozzle (3).

4. The device (1) according to any of the preceding claims, wherein the actuating means (4) comprise a manual actuator, an electro mechanic actuator, an electromotor actuator, a pneumatic actuator and/or an hydraulic actuator.

5. The device (1) according to any of the preceding claims, wherein the actuating means (4) further comprise locking means configured for locking the foldable nozzle (3).

6. The device (1) according to any of the preceding claims, wherein the deflector plate (6) is made of metallic or composite material.

7. The device (1) according to any of the preceding claims, wherein the covering material (3.4) is made of textile or plastic material.

8. The device (1) according to any of the preceding claims, wherein the outlet (3.2) of the foldable nozzle (3), in an extended position of the foldable nozzle (3), is located approximately in a range of [-20; +20] degrees with respect to horizontal datum.

9. The device (1) according to any of the preceding claims, wherein the plurality of frames (3.3) are telescopic frames configured for being extendable away from the articulation members (2.1, 2.2).

10. A firefighting system (10) comprising a device (1) for discharging a fluid off an aircraft according to any of claims 1 to 9.

11. The firefighting system (10) according to the preceding claim, further comprising a tank and a discharge conduct (11) having an inlet (11.1) and an outlet (11.2), wherein the tank is in fluid communication with the inlet (11.1) of the discharge conduct (11) and wherein the device (1) is in fluid communication with the outlet (11.2) of the discharge conduct (11).

12. An aircraft (100) comprising a firefighting system (10) according to any of claims 10 or 11.

13. The aircraft (100) according to the preceding claim, further comprising controlling means (101) configured for controlling the actuating means (4).

14. A method for discharging a fluid off an aircraft (100), the method comprising the following steps:
a) providing a firefighting system (10) according to any of claims 10 or 11 or an aircraft according to claim 12 or 13,
b) extending the foldable nozzle (3) by means of the actuating means (4) until the outlet (3.2) of the foldable nozzle (3) reaches a predetermined position,
c) discharging the fluid off the aircraft (100).

15. The method according to the preceding claim, wherein the predetermined position of step b) is selected from a first, a second or a third predetermined position and wherein:
- at the first predetermined position, the outlet (3.2) of the foldable nozzle (3) is oriented at -20 degrees with respect to horizontal datum,
- at the second predetermined position, the outlet (3.2) of the foldable nozzle (3) is parallel to horizontal datum,
- at the third predetermined position, the outlet (3.2) of the foldable nozzle (3) is oriented at +20 degrees with respect to horizontal datum.

## Patentansprüche

1. Eine Vorrichtung (1) zum Entladen eines Fluids aus einem Luftfahrzeug (100), wobei die Vorrichtung (1) umfasst:
zwei Gelenkglieder (2.1, 2.2),
eine klappbare Düse (3), die einen Einlass (3.1), einen Auslass (3.2), eine Vielzahl von Rahmen (3.3) und ein Deckmaterial (3.4), das zwischen Rahmen aus der Vielzahl von Rahmen (3.3) angeordnet ist, aufweist, wobei die Vielzahl von Rahmen (3.3) zwei Enden (3.3.1, 3.3.2), die drehbar an den Gelenkgliedern (2.1, 2.2) angebracht sind, aufweisen,
Betätigungsmittel (4), die für ein Drehen der Vielzahl von Rahmen (3.3) konfiguriert sind, und
Schließmittel (5), die für ein Schließen eines Teils des Einlasses (3.1) der klappbaren Düse (3) konfiguriert sind,
wobei
die klappbare Düse (3) weiterhin ein Abschirmblech (6), das zwischen wenigstens zwei Rahmen aus der Vielzahl von Rahmen (3.3) angeordnet ist, umfasst.

2. Die Vorrichtung (1) nach dem vorstehenden Anspruch, die weiterhin Stützmittel (7), die derart angeordnet sind, dass sie die Gelenkglieder (2.1, 2.2) verbinden, umfasst.

3. Die Vorrichtung (1) nach einem der vorstehenden Ansprüche, wobei das Abschirmblech (6) zwischen den letzten zwei aufeinanderfolgenden Rahmen aus der Vielzahl von Rahmen (3.3) an dem Auslass (3.2) der klappbaren Düse (3) angeordnet ist.

4. Die Vorrichtung (1) nach einem der vorstehenden Ansprüche, wobei die Betätigungsmittel (4) ein manuelles Stellglied, ein elektromechanisches Stellglied, ein elektromotorisches Stellglied, ein pneumatisches Stellglied und/oder ein hydraulisches Stellglied umfassen.

5. Die Vorrichtung (1) nach einem der vorstehenden Ansprüche, wobei die Betätigungsmittel (4) weiterhin Sperrmittel, die für ein Sperren der klappbaren Düse (3) konfiguriert sind, umfassen.

6. Die Vorrichtung (1) nach einem der vorstehenden Ansprüche, wobei das Abschirmblech (6) aus einem Metall- oder Verbundmaterial ausgebildet ist.

7. Die Vorrichtung (1) nach einem der vorstehenden Ansprüche, wobei das Deckmaterial (3.4) aus einem Textil- oder Kunststoffmaterial ausgebildet ist.

8. Die Vorrichtung (1) nach einem der vorstehenden Ansprüche, wobei der Auslass (3.2) der klappbaren Düse (3) in einer ausgefahrenen Position der klappbaren Düse (3) in einem Bereich von ungefähr [-20; +20] Grad in Bezug auf eine horizontale Bezugsebene angeordnet ist.

9. Die Vorrichtung (1) nach einem der vorstehenden Ansprüche, wobei die Vielzahl von Rahmen (3.3) teleskopische Rahmen, die für ein Ausfahren weg von den Gelenkgliedern (2.1, 2.2) konfiguriert sind, sind.

10. Ein Brandbekämpfungssystem (10), das eine Vorrichtung (1) für das Entladen eines Fluids aus einem Luftfahrzeug nach einem der Ansprüche 1 bis 9 umfasst.

11. Das Brandbekämpfungssystem (10) nach dem vorstehenden Anspruch, das weiterhin einen Tank und eine Entladungsleitung (11) mit einem Einlass (11.1) und einem Auslass (11.2) umfasst, wobei der Tank in einer Fluidverbindung mit dem Einlass (11.1) der Entladungsleitung (11) steht und wobei die Vorrichtung (1) in einer Fluidverbindung mit dem Auslass (11.2) der Entladungsleitung (11) steht.

12. Ein Luftfahrzeug (100), das ein Brandbekämpfungssystem (10) nach einem der Ansprüche 10 oder 11 umfasst.

13. Das Luftfahrzeug (100) nach dem vorstehenden Anspruch, das weiterhin Steuerungsmittel (101), die für das Steuern der Betätigungsmittel (4) konfiguriert sind, umfasst.

14. Ein Verfahren zum Entladen eines Fluids aus einem Luftfahrzeug (100), wobei das Verfahren die folgenden Schritte umfasst:
a) Vorsehen eines Brandbekämpfungssystems (10) nach einem der Ansprüche 10 oder 11 oder eines Luftfahrzeugs nach Anspruch 12 oder 13,
b) Ausfahren der klappbaren Düse (3) mittels der Betätigungsmittel (4), bis der Auslass (3.2) der klappbaren Düse (3) eine vorbestimmte Position erreicht,
c) Entladen des Fluids aus dem Luftfahrzeug (100).

15. Das Verfahren nach dem vorstehenden Anspruch, wobei die vorbestimmte Position des Schritts b) aus einer ersten, einer zweiten oder einer dritten vorbestimmten Position ausgewählt ist und wobei:
- an der ersten vorbestimmten Position der Auslass (3.2) der klappbaren Düse (3) mit -20 Grad in Bezug auf die horizontale Bezugsebene ausgerichtet ist,
- an der zweiten vorbestimmten Position der Auslass (3.2) der klappbaren Düse (3) parallel zur horizontalen Bezugsebene ist,
- an der dritten vorbestimmten Position der Auslass (3.2) der klappbaren Düse (3) mit +20 Grad in Bezug auf die horizontale Bezugsebene ausgerichtet ist.

## Revendications

1. Un dispositif (1) pour évacuer un fluide hors d'un aéronef (100), le dispositif (1) comprenant :
deux éléments d'articulation (2.1, 2.2),
une buse repliable (3) ayant une entrée (3.1), une sortie (3.2), une pluralité de cadres (3.3) et un matériau de recouvrement (3.4) situé entre des cadres de la pluralité de cadres (3.3), dans laquelle la pluralité de cadres (3.3) ont deux extrémités (3.3.1, 3.3.2) fixées de manière rotative aux éléments d'articulation (2.1, 2.2),
des moyens d'actionnement (4) configurés pour faire tourner la pluralité de cadres (3.3), et
des moyens de fermeture (5) configurés pour fermer une portion de l'entrée (3.1) de la buse repliable (3),
dans lequel
la buse repliable (3) comprend en outre une plaque déflectrice (6) située entre au moins deux cadres de la pluralité de cadres (3.3).

2. Le dispositif (1) selon la revendication précédente, comprenant en outre des moyens de support (7) agencés en reliant les éléments d'articulation (2.1, 2.2).

3. Le dispositif (1) selon l'une quelconque des revendications précédentes, dans lequel la plaque déflectrice (6) est située entre les deux derniers cadres successifs de la pluralité de cadres (3.3) à la sortie (3.2) de la buse repliable (3).

4. Le dispositif (1) selon l'une quelconque des revendications précédentes, dans lequel les moyens d'actionnement (4) comprennent un actionneur manuel, un actionneur électromécanique, un actionneur électromoteur, un actionneur pneumatique et/ou un actionneur hydraulique.

5. Le dispositif (1) selon l'une quelconque des revendications précédentes, dans lequel les moyens d'actionnement (4) comprennent en outre des moyens de verrouillage configurés pour verrouiller la buse repliable (3).

6. Le dispositif (1) selon l'une quelconque des revendications précédentes, dans lequel la plaque déflectrice (6) est constituée d'un matériau métallique ou composite.

7. Le dispositif (1) selon l'une quelconque des revendications précédentes, dans lequel le matériau de recouvrement (3.4) est constitué d'un matériau textile ou plastique.

8. Le dispositif (1) selon l'une quelconque des revendications précédentes, dans lequel la sortie (3.2) de la buse repliable (3), dans une position étendue de la buse repliable (3), est située approximativement dans une plage de [-20 ; +20] degrés par rapport à un plan de référence horizontal.

9. Le dispositif (1) selon l'une quelconque des revendications précédentes, dans lequel la pluralité de cadres (3.3) sont des cadres télescopiques configurés pour être extensibles à distance des éléments d'articulation (2.1, 2.2).

10. Un système de lutte contre les incendies (10) comprenant un dispositif (1) pour évacuer un fluide hors d'un aéronef selon l'une quelconque des revendications 1 à 9.

11. Le système de lutte contre les incendies (10) selon la revendication précédente, comprenant en outre un réservoir et un conduit d'évacuation (11) ayant une entrée (11.1) et une sortie (11.2), dans lequel le réservoir est en communication fluidique avec l'entrée (11.1) du conduit d'évacuation (11) et dans lequel le dispositif (1) est en communication fluidique avec la sortie (11.2) du conduit d'évacuation (11).

12. Un aéronef (100) comprenant un système de lutte contre les incendies (10) selon l'une quelconque des revendications 10 ou 11.

13. L'aéronef (100) selon la revendication précédente, comprenant en outre des moyens de commande (101) configurés pour commander les moyens d'actionnement (4).

14. Un procédé pour évacuer un fluide hors d'un aéronef (100), le procédé comprenant les étapes suivantes :
a) fournir un système de lutte contre les incendies (10) selon l'une quelconque des revendications 10 ou 11 ou un aéronef selon la revendication 12 ou 13,
b) étendre la buse repliable (3) au moyen des moyens d'actionnement (4) jusqu'à ce que la sortie (3.2) de la buse repliable (3) atteigne une position prédéterminée,
c) évacuer le fluide hors de l'aéronef (100).

15. Le procédé selon la revendication précédente, dans lequel la position prédéterminée de l'étape b) est sélectionnée parmi une première, une deuxième ou une troisième position prédéterminée et dans lequel :
- à la première position prédéterminée, la sortie (3.2) de la buse repliable (3) est orientée à -20 degrés par rapport au plan de référence horizontal,
- à la deuxième position prédéterminée, la sortie (3.2) de la buse repliable (3) est parallèle au plan de référence horizontal,
- à la troisième position prédéterminée, la sortie (3.2) de la buse repliable (3) est orientée à +20 degrés par rapport au plan de référence horizontal.
